# FASCICULE DE BREVET EUROPEEN

(11) **EP 2 880 351 B1**
(45) Date de publication et mention de la délivrance du brevet: **06.03.2019**
(21) Numéro de dépôt: 13744563.1
(22) Date de dépôt: 01.08.2013
(51) Int. Cl.: F16L 58/08, F16L 58/10, F16L 9/147

(54) **ÉLÉMENT DE TUYAUTERIE À BASE DE FER POUR CANALISATION ENTERRÉE, COMPRENANT UN REVÊTEMENT EXTÉRIEUR**
AUS EISEN HERGESTELLTES ROHR FÜR EINE ERDVERLEGTE ROHRLEITUNG MIT EINER AUSSENBESCHICHTUNG
PIPE MEMBER MADE FROM IRON FOR A BURIED PIPELINE, COMPRISING AN OUTER COATING

(30) Priorité: 06.08.2012 FR 1257638
(43) Date de publication de la demande: 10.06.2015
(73) Titulaire: Saint-Gobain PAM, 21 Avenue Camille Cavallier 54700 Pont-à-Mousson (FR)
(72) Inventeur: ALEXANDRE, Pascal, F-54200 Toul (FR); NOUAIL, Gérard, F-57000 Metz (FR)
(74) Mandataire: Lavoix
(86) Numéro de dépôt international: PCT/EP2013/066220
(87) Numéro de publication internationale: WO 2014/023646

(56) Documents cités:
- EP-A1- 1 059 365
- WO-A1-94/19640
- WO-A1-2009/073196
- DE-A1- 10 038 148
- US-A- 5 518 793

## Description

La présente invention concerne un élément de tuyauterie à base de fer, notamment en fonte, pour canalisation enterrée, comprenant un revêtement extérieur. Ces éléments de tuyauteries sont notamment employés dans des canalisations d'adduction d'eau potable ou d'eaux usées.

Par "éléments de tuyauterie", on entend les tuyaux ainsi que les divers accessoires tels que les coudes, les raccords etc.

La corrosion par les sols des métaux ferreux est un phénomène d'une nature différente de la corrosion atmosphérique et consiste, pour l'essentiel, en la création de zones d'oxydation électriquement associées à des zones de réduction pouvant être situées à une certaine distance. En conséquence, il se produit des détériorations localisées et par conséquent importantes du métal ferreux.

La protection anticorrosion des éléments de tuyauterie enterrés présente ainsi une difficulté particulière, d'autant plus que les terrains sont hétérogènes et de natures très diverses, que les éléments de tuyauterie, suivant leur utilisation, véhiculent des fluides à des températures différentes, modifiant les conditions de corrosion. La protection anticorrosion extérieure des éléments de tuyauterie dans les sols particulièrement corrosifs, les terrains de basse résistivité (bords de mer, marais salants, ...), les terrains naturels très acides ou très alcalins, et dans les environnements soumis à des pollutions (chimiques, agricoles, électriques,...), est effectuée en utilisant un revêtement en matériau synthétique inerte chimiquement qui assure un rôle de barrière étanche et empêche l'accès de l'électrolyte du sol au contact de la fonte.

L'amélioration des systèmes de protection anticorrosion a conduit à une diminution des cas de corrosion sur tuyaux.

Selon l'ouvrage Pipeline risk management manual (en français : Manuel de gestion des risques liés aux canalisations) - troisième édition - W. Kent Muhlbauer - Gulf Professional Publishing - Elsevier, pages 3/43 à 3/45, l'endommagement par une tierce partie est la cause première des défaillances de canalisations enterrées. L'administration des transports aux USA (en anglais : *US Department of Transportation*) confirme que les accidents causés par une tierce partie sont la première cause de dommage, à l'origine de 20 à 40 % des cas. Des données de l'industrie gazière européenne indiquent également que les ruptures causées par une tierce partie représentent 50 % des défaillances.

En effet, la manutention des éléments de tuyauteries destinés à être enterrés conduit fréquemment à blesser en divers emplacements leur surface extérieure. Cela est d'autant plus vrai que le volume, l'encombrement et la masse des éléments de tuyauteries sont élevés.

L'endommagement par une tierce partie peut conduire à une rupture immédiate de la canalisation lorsque la structure de la canalisation est fortement atteinte, ou à un endommagement d'un revêtement anticorrosion extérieur. La fonte de la paroi de l'élément de tuyauterie est alors laissée sans protection contre les agressions du sol. Dans ce cas, la rupture peut intervenir plusieurs années après l'endommagement, par corrosion du métal.

Ainsi, lorsque la protection anticorrosion est assurée par un revêtement barrière, qui isole électriquement la canalisation, l'espérance de vie de la canalisation est fortement diminuée à la suite d'un endommagement de ce revêtement.

Le document US 5 518 793 décrit un élément de tuyauterie, en particulier en fonte, revêtu de deux couches métalliques et d'une couche poreuse, dite « bouche-pores », comprenant un liant organique.

L'invention a pour but de fournir un élément de tuyauterie à base de fer pour canalisation enterrée présentant une résistance améliorée à la corrosion, notamment en cas d'endommagement de sa surface externe par une tierce partie, par exemple lors de la pose, ou postérieurement en cas d'intervention à proximité de l'élément de tuyauterie.

A cet effet, l'invention a pour objet un élément de tuyauterie selon la revendication 1.

Par « comprenant au moins une couche poreuse d'alliage zinc/aluminium », on n'exclut pas que la première couche soit constituée uniquement de la couche poreuse d'alliage métallique, c'est à dire constituée d'une couche unique.

Selon des modes particuliers de réalisation, le revêtement peut comprendre l'une ou plusieurs des caractéristiques suivantes, prise(s) isolément ou selon toutes les combinaisons techniquement possibles :
- la première couche est constituée de ladite couche poreuse d'alliage zinc/aluminium ;
- la première couche comprend en outre une couche de peinture bouche-pores située entre la couche poreuse d'alliage zinc/aluminium et la seconde couche, de préférence située sur la couche poreuse d'alliage zinc/aluminium ;
- la seconde couche comprend une colle thermofusible ;
- la seconde couche comporte un pigment anticorrosion et/ou un agent bactéricide ;
- la seconde couche est sensiblement dépourvue de constituant métallique ;
- le matériau organique de synthèse comprend du polyéthylène, par exemple du polyéthylène haute densité bimodal, ou comprend du polypropylène ;
- le matériau organique de synthèse comprend du polyéthylène ou du polypropylène renforcé par des charges minérales dures ;
- la troisième couche comporte un colorant, notamment fluorescent, conférant à l'élément de tuyauterie un contraste maximal avec la couleur du sol dans lequel l'élément de tuyauterie est destiné à être enterré ;
- la troisième couche présente un fort pouvoir réfléchissant de la lumière, obtenu notamment grâce à des charges minérales ;
- la couche poreuse d'alliage zinc/aluminium présente une densité surfacique d'au moins 300 g/m² et de préférence d'au moins 400 g/m² ;
- la couche poreuse d'alliage zinc/aluminium contient de 10% à 30% d'aluminium en proportion massique ;
- la couche poreuse d'alliage zinc/aluminium est formée d'un alliage Zn/AI à 15% d'aluminium et 85% de zinc en proportions massiques ;
- la couche poreuse d'alliage zinc/aluminium comporte un ou plusieurs éléments d'alliage supplémentaires, avantageusement pris parmi le magnésium, l'étain, le cuivre et l'argent, avec des teneurs massiques pouvant atteindre 5% ;
- la couche poreuse d'alliage zinc/aluminium est déposée avec une densité surfacique d'au moins 300 g/m², de préférence d'au moins 400 g/m² ;
- les charges minérales dures comprennent du quartz et/ou de la wollastonite ;
- les charges minérales dures représentent avantageusement entre 1% et 20% en poids de la troisième couche.

L'invention concerne aussi une canalisation enterrée comprenant des éléments de tuyauterie tels que décrits ci-dessus.

L'invention concerne enfin un procédé de fabrication d'un élément de tuyauterie tel que décrit ci-dessus, comprenant au moins les étapes suivantes :
(a) dépôt par métallisation à l'arc de la couche poreuse d'alliage zinc/aluminium ;
(b) dépôt de la seconde couche ; et
(c) dépôt de la troisième couche.

Selon des modes particuliers de réalisation, le procédé peut comprendre l'une ou plusieurs des caractéristiques suivantes, prise(s) isolément ou selon toutes les combinaisons techniquement possibles :
- la couche poreuse d'alliage zinc/aluminium est déposée avec une densité surfacique d'au moins 300 g/m² et de préférence d'au moins 400 g/m² ;
- la seconde couche et la troisième couche sont déposées respectivement, au choix, par extrusion, par pulvérisation, ou par coextrusion de l'une et l'autre ;
- on ajoute un colorant, notamment fluorescent, dans le matériau organique de synthèse de la troisième couche lors de l'extrusion, de la coextrusion ou de la pulvérisation de la troisième couche, de manière à obtenir un contraste de couleur avec le sol dans lequel l'élément de tuyauterie est destiné à être enterré.

L'invention a aussi pour objet un élément de tuyauterie à base de fer, notamment en fonte, pour canalisation enterrée, comprenant un revêtement extérieur, l'élément de tuyauterie étant caractérisé en ce que le revêtement extérieur comprend :
- une première couche, poreuse, d'alliage zinc/aluminium contenant 5 à 60 % d'aluminium en proportion massique ;
- une seconde couche d'adhésif située sur la première couche ; et
- une troisième couche située sur la seconde couche et comprenant un matériau organique de synthèse.

Selon des modes particuliers de réalisation, le revêtement peut comprendre l'une ou plusieurs des caractéristiques suivantes, prise(s) isolément ou selon toutes les combinaisons techniquement possibles :
- la première couche présente une densité surfacique d'au moins 300 g/m² et de préférence d'au moins 400 g/m² ;
- la première couche contient de 10% à 30% d'aluminium en proportion massique ;
- la première couche est formée d'un alliage Zn/AI à 15% d'aluminium et 85% de zinc en proportions massiques ;
- la première couche comporte un ou plusieurs éléments d'alliage supplémentaires, avantageusement pris parmi le magnésium, l'étain, le cuivre et l'argent, avec des teneurs massiques pouvant atteindre 5% ;
- la première couche est déposée avec une densité surfacique d'au moins 300 g/m², de préférence d'au moins 400 g/m².

L'invention concerne aussi une canalisation enterrée comprenant des éléments de tuyauterie tels que décrits ci-dessus.

L'invention concerne enfin un procédé de fabrication d'un élément de tuyauterie tel que décrit ci-dessus, comprenant au moins les étapes suivantes :
(a) dépôt par métallisation à l'arc de la première couche ;
(b) dépôt de la seconde couche ; et
(c) dépôt de la troisième couche.

Selon des modes particuliers de réalisation, le procédé peut comprendre l'une ou plusieurs des caractéristiques suivantes, prise(s) isolément ou selon toutes les combinaisons techniquement possibles :
- la première couche est déposée avec une densité surfacique d'au moins 300 g/m² et de préférence d'au moins 400 g/m².

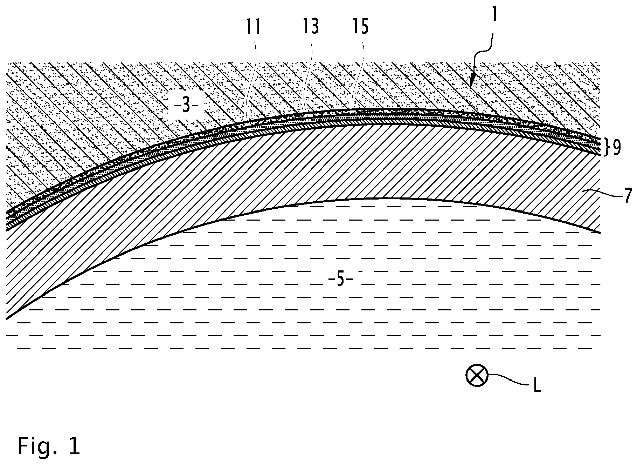

L'invention sera mieux comprise à la lecture de la description qui va suivre, donnée uniquement à titre d'exemple, et faite en se référant à la figure unique, qui est une vue schématique et partielle d'une section transversale d'un élément de tuyauterie selon l'invention.

Sur la figure est représenté un élément de tuyauterie 1 selon l'invention. L'élément de tuyauterie 1 est enterré dans un sol 3 et sert à transporter un fluide 5, par exemple de l'eau potable. L'élément de tuyauterie 1 fait partie d'une canalisation enterrée (non représentée) comprenant une pluralité d'éléments de tuyauterie analogues à l'élément de tuyauterie 1.

L'élément de tuyauterie 1 comprend un élément de tuyauterie brut 7 et un revêtement extérieur 9 situé entre le sol 3 et l'élément de tuyauterie brut 7, avantageusement réparti sur l'élément de tuyauterie brut 7 de manière à l'isoler du sol 3.

L'élément de tuyauterie brut 7 est à base de fer, avantageusement en fonte ductile. Par "fonte ductile", on entend une fonte dans laquelle le graphite est présent essentiellement sous forme sphéroïdale.

L'élément de tuyauterie brut 7 est par exemple un tuyau. Dans l'exemple représenté, il s'étend selon une direction longitudinale L perpendiculaire au plan de la figure. Seule une portion de la section transversale de l'élément de tuyauterie brut 7 est représentée sur la figure, le reste de la section pouvant s'extrapoler sans difficulté à partir de la portion représentée.

Le fluide 5 circule à l'intérieur du l'élément de tuyauterie brut 7 selon la direction longitudinale L. Un revêtement intérieur, non représenté, peut exister sur une paroi interne de l'élément de tuyauterie brut 7, pour isoler le fluide 5 de l'élément de tuyauterie 7. Ce revêtement intérieur est avantageusement à base de mortier de ciment ou d'un matériau polymère.

Le revêtement extérieur 9 comprend une première couche 11 située sur l'élément de tuyauterie brut 7, une seconde couche 13 située sur la première couche 11, et une troisième couche 15 située sur la seconde couche 13.

La première couche 11 est poreuse. Elle est formée d'un alliage zinc/aluminium contenant 5 à 60% d'aluminium en proportion massique. La première couche 11 est déposée sur la paroi externe de l'élément de tuyauterie brut 7, avantageusement par métallisation à l'arc électrique.

Avantageusement, la première couche 11 contient de 10% à 30% d'aluminium, et est notamment formée d'un alliage Zn/AI à 15% d'aluminium et 85% de zinc en proportions massiques. L'alliage peut également comporter d'autres métaux, tels que le magnésium, l'étain, le cuivre et l'argent, dans des quantités pouvant atteindre 5% en poids. La première couche 11 présente par exemple une densité surfacique d'au moins 300 g/m², de préférence d'au moins 400 g/m².

La seconde couche 13 est un adhésif. Elle assure une liaison mécanique entre la première couche 11 et la troisième couche 15.

L'adhésif est avantageusement une colle thermofusible, connue sous la dénomination anglaise *hot-melt.* Cette colle est avantageusement dépourvue de constituant métallique.

L'adhésif présente avantageusement l'une ou plusieurs des propriétés suivantes :
- un pouvoir élevé d'adhérence sur les polymères, notamment sur le polypropylène ou sur le polyéthylène ;
- une rhéologie et une résistance au fluage adaptées à des conditions climatiques de service extrêmes, par exemple un fort ensoleillement, une température ambiante de stockage élevée pouvant atteindre 60°C, une température ambiante de stockage basse pouvant atteindre -40 °C, et/ou une température du fluide 5 pouvant atteindre 60°C ;
- il comprend au moins un principe actif, par exemple un agent bactéricide tel que le cuivre, l'argent et leurs sels ou oxydes, et/ou un pigment anticorrosion tel que par exemple le phosphate de zinc, l'oxyde de zinc, l'oxyde de zinc modifié et leurs mélanges, permettant d'accroître le pouvoir protecteur de la première couche 11 dès lors que la première couche 11 est exposée à la corrosion, comme cela sera expliqué ci-dessous.

L'adhésif est par exemple à base d'un copolymère éthylène-acétate de vinyle ou d'un copolymère éthylène-acrylate.

La troisième couche 15 est constituée d'un matériau organique de synthèse, par exemple d'une résine à base de polyéthylène, par exemple à base de polyéthylène haute densité bimodal, ou est constituée d'une résine à base de polypropylène. La troisième couche 15 présente avantageusement une épaisseur comprise entre 1 mm et 5 mm environ.

La résine polyéthylène ou polypropylène de la troisième couche 15 comporte avantageusement des charges minérales dures, pour renforcer sa résistance aux agressions mécaniques dues à une tierce partie ou à des points durs du sol 3.

Les charges minérales dures sont par exemple du quartz et/ou de la wollastonite. La quantité de charges minérales dures représente avantageusement entre 1% et 20% en poids de la troisième couche 15.

Avantageusement, un marquage distinctif de la surface extérieure de la troisième couche 15 est effectué, afin d'identifier la nature du fluide transporté. Le marquage est par exemple réalisé par l'intermédiaire de bandes colorées selon des codes de couleur nationaux ou internationaux (Norme ISO R 508 - 1966). Les bandes sont par exemple collées, imprimées ou coextrudées sur la troisième couche 15.

Simultanément ou alternativement, le matériau organique de synthèse de la troisième couche 15 peut comprendre des pigments ou colorants, de préférence fluorescents, pour conférer à la troisième couche 15 une couleur définissant un contraste maximal avec la couleur du sol 3. Ceci permet une meilleure détection visuelle de l'élément de tuyauterie 1, ce qui réduit considérablement les risques d'endommagement par inadvertance de l'élément de tuyauterie 1. Il a été constaté en effet que les grillages avertisseurs souvent placés au-dessus des canalisations ne sont pas toujours suffisants pour éviter de tels endommagements.

Par exemple, si la canalisation est posée dans un sol 3 constitué de sable de Fontainebleau, de couleur claire, la troisième couche 15 est choisie de couleur foncée, avantageusement noir ou bleu foncé, pour maximiser le contraste entre le sol 3 et la canalisation.

La troisième couche 15 forme normalement une barrière étanche entre la paroi métallique de l'élément de tuyauterie brut 7 et le sol 3. Elle empêche alors tout contact entre la fonte ductile et l'eau du sol 3 agissant comme un électrolyte.

La première couche 11 est exposée uniquement en cas de blessure du revêtement 9 endommageant la troisième couche 15. La première couche 11 offre alors une protection anticorrosion additionnelle et permet ainsi de différer l'apparition d'une défaillance de l'élément de tuyauterie 1. Le délai d'apparition d'une défaillance est conditionné par les caractéristiques de la première couche 11 et de la seconde couche 13 qui assurent une liaison mécanique entre la paroi en fonte et la troisième couche 15.

Tant que, et là où, la troisième couche 15 n'est pas endommagée, la troisième couche 15 agit de façon passive, en formant une couche barrière contre la propagation de corrosion. Lorsque la troisième couche 15 est endommagée, la première couche 11 agit de façon active, en assurant une protection galvanique de l'élément de tuyauterie 1.

En effet, sous l'action des agents corrosifs du sol 3, la première couche 11 se transforme alors en une couche protectrice de produits de corrosion stable dans le milieu où elle a pris naissance. La couche d'alliage zinc/aluminium est par ailleurs dite "sacrificielle" par rapport à la fonte, en ce sens qu'elle peut se consommer progressivement par oxydation sous l'effet de la pile électrochimique formée par la fonte, l'alliage et le sol, pour protéger la fonte sous-jacente ou mise à nu au niveau de défauts de la couche d'alliage, par formation de ladite couche protectrice.

Du fait de son dépôt par métallisation à l'arc, la première couche 11 est constituée de gouttelettes solidifiées et est donc poreuse, et, par un choix approprié de la taille des pores et de l'épaisseur de la première couche 11, on peut régler les conditions, notamment la vitesse, de formation de la couche protectrice. On a constaté que la structure biphasique de l'alliage zinc/aluminium favorise le piégeage des produits de corrosion du zinc.

En outre, du fait de sa microstructure métallique, la première couche 11 est ductile. En cas de choc ou d'endommagement de la troisième couche 15 par une tierce partie, la première couche 11 est déformée plastiquement et reste adhérente à la fonte ductile. La ductilité de la première couche 11 contribue à la pérennité de la protection, même après endommagement de la troisième couche 15.

On va maintenant décrire un procédé de fabrication de l'élément de tuyauterie 1. Le procédé comprend une étape a) de dépôt sur l'élément de tuyauterie brut 7 de la première couche 11 telle que décrite ci-dessus, une étape b) de dépôt sur la première couche 11 d'une seconde couche 13 telle que décrite ci-dessus, et une étape c) de dépôt sur la seconde couche 13 d'une troisième couche 15 telle que décrite ci-dessus.

Le revêtement extérieur 9 défini plus haut est appliqué sur la fonte de l'élément de tuyauterie brut 7 prise après passage de celui-ci au four de traitement thermique, donc possédant une peau constituée d'oxydes de fer.

A l'étape a), on dépose par métallisation à l'arc électrique un alliage zinc-aluminium contenant 5 à 60% d'aluminium, et de préférence 10 à 30% d'aluminium et plus particulièrement 15 % d'aluminium, pour former la première couche 11. La première couche 11 est déposée avec une densité surfacique d'au moins 400 g/m².

A l'étape b), on dépose par pulvérisation à chaud, ou par extrusion, une colle thermofusible pour former la seconde couche 13.

A l'étape c), on dépose par extrusion, ou pulvérisation, une couche de polyéthylène ou de polypropylène pour former la troisième couche 15.

Dans une variante, les étapes b) et c) peuvent être réalisées simultanément, par exemple par coextrusion de la seconde couche 13 et de la troisième couche 15.

Le pigment ou colorant précité est ajouté dans le matériau de la troisième couche 15 lors de son extrusion, pulvérisation ou coextrusion.

Grâce aux caractéristiques de l'élément de tuyauterie 1 décrit ci-dessus, celui-ci offre une résistance améliorée à la corrosion, notamment en cas d'endommagement de sa surface externe par une tierce partie, par exemple lors de la pose ou postérieurement en cas d'intervention à proximité de l'élément de tuyauterie.

Selon une autre variante, la première couche 11 comprend une couche poreuse d'alliage zinc/aluminium contenant 5 à 60 % d'aluminium en proportion massique, et une couche de peinture bouche-pores (non représentée) située entre la couche poreuse d'alliage zinc/aluminium et la seconde couche 13. Avantageusement, la première couche 11 ne comporte que ces deux couches.

La couche de peinture bouche-pores est par exemple située sur la couche poreuse d'alliage zinc/aluminium. Avantageusement, la couche de peinture bouche-pores recouvre la couche poreuse de zinc/aluminium.

La couche de peinture bouche-pores comprend par exemple une peinture bitumineuse ou une peinture à base d'une résine synthétique en phase solvantée, par exemple une résine époxy ou polyuréthane, ou en phase aqueuse comme par exemple une résine acrylique. Par « en phase solvantée », on entend que la résine synthétique est dissoute dans un solvant organique.

La couche de peinture bouche-pores présente par exemple une épaisseur d'environ 0,1 mm et est avantageusement appliquée sur la couche poreuse d'alliage zinc/aluminium par pulvérisation.

La couche de peinture bouche-pores bouche les pores de la couche poreuse d'alliage zinc/aluminium et assure une protection supplémentaire de l'alliage métallique.

## Revendications

1. Elément de tuyauterie (1) comprenant un élément de tuyauterie brut (7), à base de fer, notamment en fonte, pour canalisation enterrée dans un sol, et un revêtement extérieur (9), l'élément de tuyauterie brut (7) comportant une paroi métallique,
l'élément de tuyauterie (1) étant **caractérisé en ce que** le revêtement extérieur (9) comprend :
- une première couche (11) située sur l'élément de tuyauterie brut (7) et comportant au moins une couche poreuse d'alliage zinc/aluminium contenant 5 à 60 % d'aluminium en proportion massique ;
- une seconde couche (13) d'adhésif située sur la première couche (11) ; et
- une troisième couche (15) située sur la seconde couche (13) et comprenant un matériau organique de synthèse, la troisième couche (15) étant adaptée pour former une barrière étanche à l'eau entre la paroi métallique de l'élément de tuyauterie brut (7) et le sol.

2. Elément de tuyauterie (1) selon la revendication 1, **caractérisé en ce que** la première couche (11) est constituée de ladite couche poreuse d'alliage zinc/aluminium.

3. Elément de tuyauterie (1) selon la revendication 1, **caractérisé en ce que** la première couche (11) comprend en outre une couche de peinture bouche-pores située entre la couche poreuse d'alliage zinc/aluminium et la seconde couche (13), de préférence située sur la couche poreuse d'alliage zinc/aluminium.

4. Elément de tuyauterie (1) selon l'une quelconque des revendications 1 à 3, **caractérisé en ce que** la seconde couche (13) comprend une colle thermofusible.

5. Elément de tuyauterie (1) selon l'une quelconque des revendications 1 à 4, **caractérisé en ce que** la seconde couche (13) comporte un pigment anticorrosion et/ou un agent bactéricide.

6. Elément de tuyauterie (1) selon l'une quelconque des revendications 1 à 5, **caractérisé en ce que** la seconde couche (13) est sensiblement dépourvue de constituant métallique.

7. Elément de tuyauterie (1) selon l'une quelconque des revendications 1 à 6, **caractérisé en ce que** le matériau organique de synthèse comprend du polyéthylène, de préférence du polyéthylène haute densité bimodal, ou comprend du polypropylène.

8. Elément de tuyauterie (1) selon l'une quelconque des revendications 1 à 7, **caractérisé en ce que** le matériau organique de synthèse comprend polyéthylène ou du polypropylène renforcé par des charges minérales dures.

9. Elément de tuyauterie (1) selon l'une quelconque des revendications 1 à 8, **caractérisé en ce que** la troisième couche (15) comporte un colorant, notamment fluorescent, conférant à l'élément de tuyauterie (1) un contraste maximal avec la couleur du sol (3) dans lequel l'élément de tuyauterie (1) est destiné à être enterré.

10. Canalisation enterrée comprenant des éléments de tuyauterie (1) suivant l'une quelconque des revendications précédentes.

11. Procédé de fabrication d'un élément de tuyauterie (1) selon l'une quelconque des revendications 1 à 9, comprenant au moins les étapes suivantes :
(a) dépôt par métallisation à l'arc de la couche poreuse d'alliage zinc/aluminium ;
(b) dépôt de la seconde couche (13) ; et
(c) dépôt de la troisième couche (15).

12. Procédé selon la revendication 11, **caractérisé en ce que** la couche poreuse d'alliage zinc/aluminium est déposée avec une densité surfacique d'au moins 300 g/m² et de préférence d'au moins 400 g/m².

13. Procédé selon la revendication 11 ou 12, **caractérisé en ce que** la seconde couche (13) et la troisième couche (15) sont déposées respectivement, au choix, par extrusion, par pulvérisation, ou par coextrusion de l'une et l'autre.

14. Procédé selon l'une quelconque des revendications 11 à 13, caractérisé en qu'on ajoute un colorant, notamment fluorescent, dans le matériau organique de synthèse de la troisième couche (15) lors de l'extrusion, de la coextrusion ou de la pulvérisation de la troisième couche (15), de manière à obtenir un contraste de couleur avec le sol (3) dans lequel l'élément de tuyauterie (1) est destiné à être enterré.

## Patentansprüche

1. Rohrleitungselement (1), aufweisend ein Roh-Rohrleitungselement (7) aus Eisen, insbesondere Gusseisen, für erdbodenverlegte Kanalisation und eine Außenbeschichtung (9), wobei das Roh-Rohrleitungselement (7) eine Metallwand aufweist,
wobei das Rohrleitungselement (1) **dadurch gekennzeichnet ist, dass** die Außenbeschichtung (9) aufweist:
- eine erste Schicht (11), die auf dem Roh-Rohrleitungselement (7) angeordnet ist und die aufweist wenigstens eine poröse Schicht aus Zink/Aluminium-Legierung enthaltend 5 bis 60% Massenanteil Aluminium,
- eine zweite Schicht (13) aus Klebstoff, die auf der ersten Schicht (11) angeordnet ist, und
- eine dritte Schicht (15), die auf der zweiten Schicht (13) angeordnet ist und aufweist ein organisches Synthetik-Material, wobei die dritte Schicht (15) angepasst ist zum Bilden einer wasserdichten Barriere zwischen der Metallwand des Roh-Rohrleitungselements (7) und dem Erdboden.

2. Rohrleitungselement (1) gemäß Anspruch 1, **dadurch gekennzeichnet, dass** die erste Schicht (11) von der besagten porösen Schicht aus Zink/Aluminium-Legierung gebildet ist.

3. Rohrleitungselement (1) gemäß Anspruch 1, **dadurch gekennzeichnet, dass** die erste Schicht (11) ferner aufweist eine Spachtellackschicht, die zwischen der porösen Schicht aus Zink/Aluminium-Legierung und der zweiten Schicht (13) angeordnet ist, bevorzugt auf der porösen Zink/AluminiumSchicht angeordnet ist.

4. Rohrleitungselement (1) gemäß irgendeinem der Ansprüche 1 bis 3, **dadurch gekennzeichnet, dass** die zweite Schicht (13) einen thermoschweißbaren Kleber aufweist.

5. Rohrleitungselement (1) gemäß irgendeinem der Ansprüche 1 bis 4, **dadurch gekennzeichnet, dass** die zweite Schicht (13) ein Antikorrosions-Pigment und/oder ein bakterizides Mittel aufweist.

6. Rohrleitungselement (1) gemäß irgendeinem der Ansprüche 1 bis 5, **dadurch gekennzeichnet, dass** die zweite Schicht (13) im Wesentlich metallbestandteilfrei ist.

7. Rohrleitungselement (1) gemäß irgendeinem der Ansprüche 1 bis 6, **dadurch gekennzeichnet, dass** das organische Synthetik-Material Polyethylen, bevorzugt bimodales hochdichtes Polyethylen, aufweist oder Polypropylen aufweist.

8. Rohrleitungselement (1) gemäß irgendeinem der Ansprüche 1 bis 7, **dadurch gekennzeichnet, dass** das organische Synthese-Material aufweist Polyethylen oder Polypropylen verstärkt durch Hartmineralchargen.

9. Rohrleitungselement (1) gemäß irgendeinem der Ansprüche 1 bis 8, **dadurch gekennzeichnet, dass** die dritte Schicht (15) aufweist einen Farbstoff, insbesondere fluoreszierend, der dem Rohrleitungselement (1) einen maximalen Kontrast gegenüber der Farbe des Erdbodens (3) verleiht, in welchem das Rohrleitungselement (1) einzugraben ist.

10. Erdbodenverlegte Kanalisation mit Rohrleitungselementen (1) gemäß irgendeinem der vorhergehenden Ansprüche.

11. Verfahren zur Herstellung eines Rohrleitungselements (1) gemäß irgendeinem der Ansprüche 1 bis 9, aufweisend wenigstens die folgenden Schritte:
(a) Aufbringen der porösen Schicht aus Zink/AluminiumLegierung durch Lichtbogenmetallisierung,
(b) Aufbringen der zweiten Schicht (13) und
(c) Aufbringen der dritten Schicht (15).

12. Verfahren gemäß Anspruch 11, **dadurch gekennzeichnet, dass** die poröse Schicht aus Zink/Aluminium-Legierung aufgebracht wird mit einer Flächendichte von wenigstens 300 g/m² und bevorzugt von wenigstens 400 g/m².

13. Verfahren gemäß Anspruch 11 oder 12, **dadurch gekennzeichnet, dass** die zweite Schicht (13) und die dritte Schicht (15) respektive aufgebracht werden, wahlweise, durch Extrusion, durch Pulverbeschichten oder durch Ko-Extrusion miteinander.

14. Verfahren gemäß irgendeinem der Ansprüche 11 bis 13, **dadurch gekennzeichnet, dass** ein Farbstoff, insbesondere fluoreszierend, in das organische Synthese-Material der dritten Schicht (15) zugegeben wird während der Extrusion, der Ko-Extrusion oder des Pulverbeschichtens der dritten Schicht (15), um einen Farbkontrast gegenüber dem Erdboden (3) zu erzielen, in welchem das Rohrleitungselement (1) einzugraben ist.

## Claims

1. An iron-based piping element (1) comprising a raw piping element (7), in particular made from cast iron, for a buried pipeline, comprising an outer coating (9), the raw piping element comprising a metal wall, the piping element (1) being **characterized in that** the outer coating (9) comprises:
- a first layer (11) situated on the raw piping element (7) and comprising at least one porous layer of zinc/aluminum alloy containing 5 to 60 wt% of aluminum;
- a second layer (13) of adhesive situated on the first layer (11); and
- a third layer (15) situated on the second layer (13) and comprising a synthetic organic material, the third layer forming a sealed barrier between the metal wall of the raw piping and the soil.

2. The piping element (1) according to claim 1, **characterized in that** the first layer (11) is made up of said porous layer of zinc/aluminum alloy.

3. The piping element (1) according to claim 1, **characterized in that** the first layer (11) further comprises a layer of sealant paint situated between the porous layer of zinc/aluminum alloy and the second layer (13), preferably situated on the porous layer of zinc/aluminum alloy.

4. The piping element (1) according to any one of claims 1 to 3, **characterized in that** the second layer (13) comprises a holtmelt glue.

5. The piping element (1) according to any one of claims 1 to 4, **characterized in that** the second layer (13) includes an anticorrosion pigment and/or a bactericidal agent.

6. The piping element (1) according to any one of claims 1 to 5, **characterized in that** the second layer (13) is substantially provided without metal components.

7. The piping element (1) according to any one of claims 1 to 6, **characterized in that** the synthetic organic material comprises polyethylene, for example bimodal high-density polyethylene, or comprises polypropylene.

8. The piping element (1) according to any one of claims 1 to 7, **characterized in that** the synthetic organic material comprises polyethylene or polypropylene reinforced by hard mineral fillers.

9. The piping element (1) according to any one of claims 1 to 8, **characterized in that** the third layer (15) includes a coloring agent, in particular fluorescent, imparting a maximum contrast to the piping element (1) with respect to the color of the soil in which the piping element (1) is intended to be buried.

10. A buried pipeline comprising piping elements (1) according to any one of the preceding claims.

11. A method for manufacturing a piping element according to any one of claims 1 to 9, comprising at least the following steps:
(a) depositing the porous layer of zinc/aluminum alloy by arc metallization;
(b) depositing the second layer (13); and
(c) depositing the third layer (15).

12. The method according to claim 11, **characterized in that** the porous layer of zinc/aluminum alloy is deposited with a surface density of at least 300 g/m² and preferably at least 400 g/m².

13. The method according to claim 11 or 12, **characterized in that** the second layer (13) and the third layer (15) are respectively deposited, as desired, by extrusion, spraying, or co-extrusion of both.

14. The method according to any one of claims 11 to 13, **characterized in that** a coloring agent, in particular fluorescent, is added to the synthetic organic material of the third layer (15) during extrusion, co-extrusion or spraying of the third layer (15), so as to obtain a color contrast with the soil (3) in which the piping element (1) is intended to be buried.
